(19) Europäisches Patentamt
European Patent Office
Office européen des brevets

(11) EP 1 941 672 B1

(12) EUROPEAN PATENT SPECIFICATION

(45) Date of publication and mention
of the grant of the patent:
**18.07.2012 Bulletin 2012/29**

(21) Application number: **06795304.2**

(22) Date of filing: **21.08.2006**

(51) Int Cl.:
*H04W 72/12* (2009.01)    *H04L 12/56* (2006.01)

(86) International application number:
**PCT/IB2006/002279**

(87) International publication number:
**WO 2007/029071 (15.03.2007 Gazette 2007/11)**

(54) **QOS-AWARE RADIO RESOURCE MANAGEMENT (FOR WIRELESS COMMUNICATION) WITH ACTIVITY DETECTION**

QOS-BEWUSSTE FUNKBETRIEBSMITTELVERWALTUNG (FÜR DRAHTLOSE KOMMUNIKATION) MIT AKTIVITÄTSDETEKTION

GESTION DE RESSOURCES RADIO SENSIBLE A LA QUALITE DE SERVICE (QOS) (POUR COMMUNICATIONS SANS FIL) A DETECTION D'ACTIVITE

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.09.2005 US 220892**

(43) Date of publication of application:
**09.07.2008 Bulletin 2008/28**

(73) Proprietor: **Nokia Siemens Networks Oy**
**02610 Espoo (FI)**

(72) Inventors:
• **KOLDING, Troels**
**DK-9270 Klarup (DK)**
• **PEDERSEN, Klaus**
**DK-9000 Aalborg (DK)**

(74) Representative: **Borgström, Markus et al**
**Nokia Siemens Networks Oy**
**CEF CTO IPR/ Patent Administration**
**80240 Munich (DE)**

(56) References cited:
**WO-A1-02/085061        WO-A1-03/051007**
**WO-A2-2005/043844    US-A1- 2003 223 429**
**US-A1- 2004 095 960    US-A1- 2005 063 408**

• KUENYOUNG KIM ET AL.: 'A proportionally fair scheduling algorithm with QoS and priority in 1XEV-DO' THE 13TH IEEE INTERNATIONAL SYMPOSIUM ON PERSONAL, INDOOR AND MOBILE RADIO COMMUNICATIONS - PIMRC 2002, [Online] vol. 5, 15 September 2002 - 18 September 2002, pages 2239 - 2243, XP010614126 Retrieved from the Internet: <URL:http://www.ieeexplore.ieee.org/ie15/80 98/22425/01046542.pdf?tp=&arnumber=1046542& isnumber=22425>

**Description**

BACKGROUND OF THE INVENTION

*1. Technical Field*

The present invention pertains to the field of telecommunications. More particularly, the present invention pertains to so-called packet scheduling in a wireless communication system, i.e. the tasks of arranging in order packets for downlink to user equipment and allocating radio resources for use in transmitting the packets to the user equipment.

*2. Discussion of related art*

UMTS (Universal Mobile Telecommunications Service) offers both circuit-switched and packet-switched access to telecommunications services via a radio access network, called a UTRAN (UMTS terrestrial radio access network). Like any wireless communication system, UMTS includes a radio access network (a UTRAN) and a core network, which is then coupled to other communication networks, including, e.g. the Internet.

A UTRAN uses WCDMA (wideband code division multiple access) over an air interface to communicatively couple to a UE (user equipment, i.e. a wireless terminal such as a mobile station or other equipment including means for communicating with a radio access network or service access point of a telecommunication system), and includes one or more RNC's (radio network controllers) each controlling one or more Node-B's, i.e. equipment used to provide the air interface with the UE, corresponding in some respects to a base transceiver station of GSM (Global System for Mobile communications). In case of UMTS, packet scheduling is the process by which an RNC or a Node-B determines how and when to transmit packets to the UE's to which it is communicatively coupled. (A Node-B makes packet scheduling decisions for packets intended for UE's in its zone of coverage, whereas an RNC makes packet scheduling decisions for packets intended for all UE's in all the zones of the Node-B's controlled by the RNC.)

In a UTRAN, for ordinary packet access, scheduling is performed by the RNC. For what is called HSDPA (high speed downlink packet access), at least some of the packet scheduling is performed by a Node-B.

Most other wireless communication systems, e.g. GSM including a GPRS (General Packet Radio Service), also provide packet access, i.e. a communication service for bursty data, in a form generally indicated as packets, so that a UE and a server (e.g. a server attached to the Internet) can exchange data in the form of packets.

In GSM, packets are communicated using only dedicated channels.

In UMTS/WCDMA, packet data is communicated on common channels in addition to dedicated channels. In providing packet scheduling, an UMTS/WCDMA packet scheduler assigns different codes and/ or different time slots for communicating packets to a UE. In UMTS/WCDMA, UE's may share the same code and/or time slots as other UE's for receiving packets (and also for sending packets), or they may be assigned a dedicated resource, e.g. a particular code channel or one or more particular time slots. In case of a shared channel, for example, a single code may he assigned to several UEs, with each sharing the corresponding code channel via time division, i.e. each having an assigned time slot (or time slots) in a radio frame. A common channel is similar in that respect to a shared channel. There are typically several common packet channels per cell, each having a different data rate.

In case of UMTS/WCDMA, a packet scheduler must decide what channel to use to transmit packets to the UE's for which it is scheduling, and also the power and data rate to use for the packets. All of these--the channels, the power available, and the data rates--are finite resources that must be partitioned among the UE's requesting packet access service.

One factor that must often be taken into account by a packet scheduler is the possibility of different QoS requirements for the packets of different users. A parameter indicating a required QoS for a UE can--in some wireless communication systems--be provided to the Node-B/ RNC by the core network as a result of the UE having subscribed to a class of service. The other factors all have to do with the quality of the radio link to the UE, which generally degrades with distance, and can also be affected by sources of noise or other interference and also multipath. Further, the link can be highly variable because the UE can move during a communication session from a location where the link is strong, to a location where the link is poor (because of more noise or other interference, including possibly more multipath). An HSDPA UE periodically sends a Channel Quality Indicator (CQI) to the serving Node-B indicating what data rate (and using what coding and modulation schemes and number of multicodes) the UE can support under its current radio conditions.

The document WO 2005/043844 A2 describes a method in which multiple user stations (e.g., a first user station and a second user station) are selected to receive data from a base station based on the indications of signal quality associated with the plurality of the user stations. A first packet is constructed which contains signaling data for the first user station and application data for the second user station. A second packet which contains application data for the first user station is super-imposed upon the first packet. The first and second packets are transmitted simultaneously from the base station to the first and second user stations.

The document US 2004/0095960 describes a method of Reverse Link (RL) data rate allocation in a High Data Rate (such as 1xEV-DO) system as a function of Forward Link (FL) channel quality. Rate shaping of a throughput profile for multiple Access Terminals (ATs) is performed by adjusting transition probabilities associated with a data rate allocation algorithm. The transition probabilities are adjusted to encourage transitions in a desired direction. In one embodiment, the transition probabilities are adjusted as a function of the FL Signal to Interference and Noise Ratio Ratio (SINR), such as measured per serving sector or as a captured sum total of FL SINR. In another embodiment, the transition probabilities are adjusted as a function of the historical loading condition of the system. In still another embodiment, the transition probabilities are adjusted as a function of differences in rise-over-thermal values between neighboring sectors.

There are a number of scheduling strategies typically used for partitioning the capacity of a Node-B to deliver packets to UE's in its zone of coverage. Common among these, whether for a shared channel or a dedicated channel, are so-called fair throughput (which aims to give all users the same throughput), fair time (which provides all users with the same resources of time and power), and C/I scheduling (which allocates all resources to the UE having packets still to be delivered and having the strongest link). For a dedicated channel, a fair time scheduler is sometimes called a round-robin scheduler: UE's are served in sequential order so they all get the same average allocation time.

There are some packet schedulers that take into account QoS requirements and also instantaneous channel conditions. A packet scheduler typically calculates a value for a scheduling metric in arriving at scheduling decisions. The schedulers that take into account QoS requirements and also instantaneous channel conditions often include the QoS requirements directly in the scheduling metric, and then arrive at a scheduling decision in an iteration process converging in the scheduling decision, a decision that ideally meets the QoS requirements of all the UE's being served. In a system where UE's may have different fading patterns and where buffers in the Node-B (or RNC) may be on or off, such iteration may take an undesirable amount of time before the packet scheduler determines whether all the QoS requirements can be met.

What is needed is a way by which a packet scheduler can more rapidly arrive at a scheduling decision that takes into account possibly different QoS requirements for the different UE's for whom packet delivery is being scheduled, as well as the different channel conditions for the different UE's. Ideally, the output of the packet scheduler can be advantageously used in admission and load control, to adjust the radio resources of the radio access network, and to discard the most costly UE's (in terms of radio resources of the radio access network).

DISCLOSURE OF INVENTION

Accordingly, in a first aspect of the invention, a method is provided, comprising: a step in which an element of a radio access network determines for a given time interval a respective activity ratio for each wireless terminal in communication with the radio access network and having packets to be delivered to the wireless terminal by the radio access network in the given time interval; and a step in which the element of the radio access network determines for the given time interval a respective metric for each wireless terminal, for use in scheduling the packets for delivery to the wireless terminal, wherein the metric for each wireless terminal is based at least in part on the activity ratio for the wireless terminal; wherein the activity ratio for each of the wireless terminals having packets to be delivered during the given time interval is a ratio of a long-term throughput required for the wireless terminal averaged over time intervals when the wireless terminal has packets to be delivered to the wireless terminal, divided by a scheduled throughput for the wireless terminal indicating throughput experienced by the wireless terminal in the given time interval.

In accord with the first aspect of the invention, in the step of determining a metric for each wireless terminal, a scaling factor may be determined for the wireless terminal based on the activity ratio for the wireless terminal, and the scaling factor may be used to adjust by multiplication a metric for the wireless terminal according to a scheduling algorithm not taking into account the activity ratio for the wireless terminal. Further, the scheduling algorithm not taking into account the activity ratio for the wireless terminal may use as a metric for a wireless terminal in the given time interval a ratio of instantaneous supported rate to average delivered throughput, and may calculate the average delivered throughput using a recursion relation including a user-dependent convergence-controlling parameter. The scheduling algorithm not taking into account the activity ratio for the wireless terminal may be for example a proportional fair packet scheduling algorithm.

In a second aspect of the invention, a computer program product is provided, comprising a computer readable storage structure embodying computer program code thereon for execution by a computer processor, wherein said computer program code comprises instructions for performing the steps of a method according to the first aspect of the invention.

In a third aspect of the invention, an application specific integrated circuit is provided, comprising electronic components arranged and inter-connected as an integrated circuit and so as to perform the steps of a method according to the first aspect of the invention.

In a fourth aspect of the invention, an apparatus is provided, comprising: means for performing the steps of a method according to the first aspect of the invention.

In accord with the fourth aspect of the invention, the apparatus may be a component of a terminal used for wirelessly communicating packets to a wireless terminal.

The invention also provides a terminal of a radio access network for wirelessly communicating packets to a wireless terminal of a user is provided, comprising an apparatus according to the fourth aspect of the invention.

Also in accord with the fourth aspect of the invention, the apparatus may be a component of a controller of one or more terminals for communicating packets by wireless transmission.

The invention also provides a controller of a radio access network for controlling one or more terminals used for wirelessly communicating packets to a wireless terminal of users, comprising an apparatus according to the fourth aspect of the invention.

The invention also provides a telecommunications system, comprising a core network coupled to at least one element of at least one other telecommunications system, a radio access network coupled to the core network and including an apparatus according to the fourth aspect of the invention, and a plurality of wireless terminals adapted for communicatively coupling to the radio access network.

BRIEF DESCRIPTION OF THE DRAWINGS

The above and other objects, features and advantages of the invention will become apparent from a consideration of the subsequent detailed description presented in connection with accompanying drawings, in which:

Fig. 1 is a block diagram of a radio access network and packet-switching portion of a wireless communication system, and in particular a UTRAN and a SGSN of a core network of an UMTS, with the UTRAN in radio communication with two UE's.

Fig. 2 is a block diagram/ flow diagram of selected components of a Node-B in the UTRAN of Fig. 1, responsible for packet scheduling and admission and load control, and including in addition an activity detector, according to the invention.

Fig. 3 is a flow diagram of selected components shown in Fig. 1 eg., Node B, RNC, responsible for packet scheduling and admission and load control according to the invention.

BEST MODE FOR CARRYING OUT THE INVENTION

The invention is here described as providing methods and equipment for use with a UTRAN, but it should be understood that the invention is of use in any kind of wireless communication system providing packet access, i.e. providing packets to UE's communicatively coupled to the wireless communication system. Also, the invention is illustrated using a so-called proportional fair packet scheduling algorithm (which is modified by the invention as described below to take into account the scheduled throughput for a QoS user compared to the throughput required by the QoS for the user), but it should be understood that the invention is at least of use for modifying any QoS-aware packet scheduling algorithm.

The invention provides, in case of a UTRAN, a Node-B in which packet scheduling decisions for transmitting packets to UEs in wireless communication with the Node-B, are made taking into account channel conditions of the users/ UE's. The invention can also provide a RNC performing packet scheduling decisions in the same way, but doing so for all the UE's connected to all the Node-B's controlled by the RNC. Typically, the packet scheduling function is located in a Node-B for HSDPA, but in an RNC otherwise.

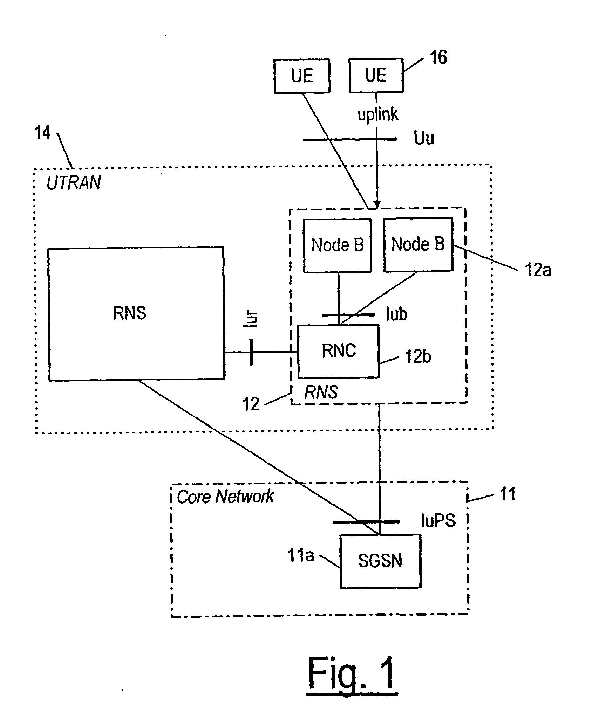

Referring now to Fig. 1, such a Node-B 12a is shown as one Node-B among others controlled by a RNC 12b (via typically wireline connections) and in communication with a UE 16 (as well as possibly other UEs) via wireless communication. The RNC and the various Node-B's constitute a Radio Network System (RNS) 12. A UTRAN 14 is constituted by the RNS 12 as well as possibly other RNS's. The one or more possible RNS's interface with a core network 11, and in particular, with a serving GPRS support node (SGSN) 11a of the core network.

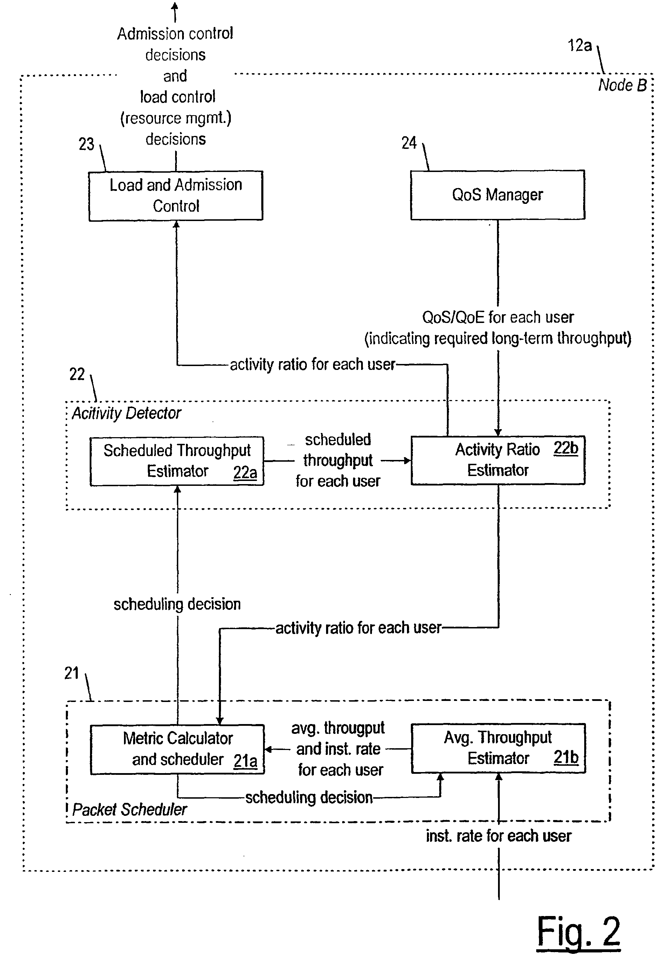

Referring now to Fig. 2, components of the Node-B 12a of particular relevance to the invention are shown, according to one embodiment of the invention. The Node-B manages radio resource, i.e. it includes radio resource management functionality by which it allocates more or less power or time or data rate for transmitting packets to each of the different UE's in its zone of coverage, so at to achieve a goal such as optimizing total throughput given one or more constraints, constraints such as providing a required quality of service to one or more of the UE's in its zone. The components shown in Fig. 2 are the key parts of the radio resource management functionality related to admission control, load control, and packet scheduling. Other components, known in the art, are not shown. The modular arrangement of the components of the Node-B 12a shown in Fig. 1 is not intended to be limiting. Other architectures besides the arrangement shown are possible, as would be clear to one skilled in the art of wireless communication.

In performing the task of radio resource management, the Node-B 12a makes what are called scheduling decisions, i.e. the Node-B schedules packets for transmission to the UE's using the radio resources available to the Node-B. The RNC, and in some cases the core network, reserves the radio resources available to the Node-B.

According to the embodiment of the invention shown in Fig. 2, the Node-B 12a, and in particular its radio resource management functionality, includes a packet scheduler 21 for scheduling the transmission of packets destined for the UE's in its zone of coverage. The packet scheduler includes a metric calculator and scheduler 21a, which calculates a value for a metric for each UE, and then makes the packet scheduling decisions using the metrics (i.e. selecting the UE having the largest metric as the UE to be served first, or else at least to be served preferentially, and so on). To calculate a value for the metric for each UE, the metric calculator uses an estimate of the average throughput for the user (for the subject time interval) and the instantaneous supported rate for the UE (for the time interval), provided by an average throughput estimator module 21b (only the average throughput is estimated, based at least in part on the instantaneous rate, which is an input to the average throughput estimator module 21b). The average throughput for a UE is an average only over the time when data for the UE is actually buffered in the Node-B for delivery to the UE.

The packet scheduler 21 provides the scheduling decisions to an activity detector 22. The activity detector includes a scheduled throughput estimator 22a, which estimates what is called here the scheduled throughput for each user, i.e. the throughput when the user is actually scheduled (i.e. when packets for are scheduled for delivery to the user).

The scheduled throughputs (one for each user) are used by an activity ratio estimator 22b, another component of the activity detector 22, along with the QoS/QoE (Quality of Service/ Quality of Experience) requirements for each user, to predict (what should be) the activity ratio for the user, i.e. e.g. the number of frames scheduled for the user compared to the number of frames in total during the session time for the user in order for the user to receive the QoS appropriate for the user (i.e. an adequate QoS, such as a subscribed-to QoS), although any measure of the time of activity for the user compared to the total time during which the Node-B is communicating packets to the UE could be used as an activity ratio. (A UE may request or subscribe to a high QoS, or may not request any particular QoS, in which case the UE is given the best possible QoS taking all requested or subscribed QoS's into account.)

The activity ratios are provided by the activity ratio estimator 22b both to the packet scheduler 21 as noted above, and also to a load and admission control module 23, for use in providing QoS-aware load and admission control. The load and admission control module 23, using the activity ratios required for each user to received adequate QoS, then allocates more or less scheduling resources to each user, stops or allows admission of new users, and/ or start to remove user from the queue (in the Node-B) of UE's having packets waiting to be scheduled (for transmission to the respective users).

In an illustrative embodiment of the invention, the packet scheduler 21 is a modified proportional fair packet scheduler (modified per the invention), and the activity detector 22 is implemented as a recursive filter with a fast adaptation interval. Hence, when priorities shift between users, or when users come into the system with different radio channel behavior--e.g. significant velocity leading to highly variable fading, multi-path delay, etc. --the system quickly reassesses the impact of the changed user requirements and channel conditions on the required activity for each user.

As mentioned, the packet scheduler uses a metric to arrive at scheduling decisions. There is a metric value for each user, for each time interval during which packets are to be transmitted to the UE's. In a conventional proportional fair packet scheduling algorithm, the metric for user $k$ in time interval $n$ (e.g. a transmission time interval), is

$$M'_k[n] = \frac{r_k[n]}{T_k[n]} \tag{1}$$

where $r_k[n]$ is the instantaneous supported rate for user $k$ in time interval $n$, and $T_k[n]$ is the average delivered throughput (for user $k$ in time interval $n$), calculated (recursively) using:

$$T_k[n] = \left(1 - \{B_k[n] > 0\} \cdot \frac{1}{N_k}\right) T_k[n-1] + \frac{\lambda_k[n]}{N_k} r_k[n] , \tag{2}$$

in which $\lambda_k[n]$ is an activity factor having a value of one if user $k$ is scheduled in $n$, and zero otherwise, $B_k[n]$ is the available bits in the buffer for user $k$ in time interval $n$, $\{B_k[n]>0\}$ is a boolean expression and is of value 1 if true, and 0 if false, and $N_k$ is a user-dependent convergence-controlling parameter and represents the memory of the filter (exponential decay).

The value for the instantaneous supported data rate for each user $r_k[n]$ is estimated--e.g. in WCDMA/HSDPA but also in other wireless communication systems--at the receiver (i.e. at the UE) and signaled to the Node-B as such, i.e. as a value for the instantaneous supported data rate for each user $r_k[n]$. In other wireless communication systems there are similar mechanisms, although sometimes the reported measure is a signal-to-interference level rather than an instantaneous supported data rate, but a mapping between the two is then performed by the packet scheduler. Sometimes even in WCDMA without HSDPA, and where the Node-B provides packets over a shared downlink channel, instead of the UE signaling a value for $r_k[n]$, link quality for communications with the UE on other than the shared packet downlink channel can be used by the packet scheduler to predict performance on the shared packet downlink channel, and the performance can then be mapped or correlated with a value for $r_k[n]$.

$N_k$ is a dimensionless constant that makes the proportional fair packet scheduling algorithm either (1) converge faster with lesser accuracy, or (2) converge slower with very high accuracy. In general, the optimum value for $N_k$ (which can be set e.g. by the manufacturer, operator, or dynamically, according to some other algorithm) depends on the traffic profile for the user and the number of users in the system. Hence, in general $N_k$ is, according to findings by the inventors, optimally different for every user in the system, and hence the subscript k denoting a particular user. Reasonable values appear to be in the range of 200-700.

Now in the illustrative embodiment using a conventional proportional fair packet scheduler modified according to the invention, the conventional metric $M'_k[n]$ is scaled by a user-specific scaling factor $\alpha_k[n]$, to arrive at a modified metric,

$$M_k[n] = \alpha_k[n] \cdot M'_k[n] \; . \qquad (3)$$

The user-specific scaling factor $\alpha_k[n]$ can be thought of as a priority factor.

The scaling factor $\alpha_k[n]$ is calculated as follows. First, the above-mentioned activity ratio, denoted $\hat{\alpha}_k[n]$, is calculated, using:

$$\hat{\alpha}_k[n] = \frac{T_{req,k}}{T_{sch,k}[n]} \qquad (4)$$

where: $T_{req,k}$ is the required throughput for user $k$ (and shown as provided to the activity ratio estimator 22b by the QoS manager 24 of Fig. 2), i.e. the long-term throughput requirement as a guaranteed data rate when the scheduling entity (e.g. a Node-B) has data buffered for user $k$; and $T_{sch,k}[n]$ is what is here called the scheduled throughput, and is the throughput for user $k$ during the time when use $k$ is actually scheduled. $T_{req,k}$ is known to the packet scheduler.

$T_{sch,k}[n]$ is calculated (also recursively, like $T_k[n]$, i.e. as a recursive filter) using:

$$T_{sch,k}[n] = \left(1 - \frac{\lambda_k[n]}{N_s}\right) T_{sch,k}[n-1] + \frac{\lambda_k[n]}{N_s} r_k[n] \; , \qquad (5)$$

where $N_s$ is a user-independent convergence-controlling parameter replacing $N_k$ and represents the effective distribution between the UE's, and is typically smaller than $N_k$ (for any $k$). $N_s$ is in many ways similar-to $N_k$ except that it relates to the second tier filter and the inventors have found that it is advantageously the same for all users (since it is trying to predict the overall user diversity and activity factor for a user, but considering the scheduling of all other users). It is also dimensionless and it seems from studies by the inventors that the performance of the scheduler does not depend much on its setting, but that advantageous settings are for values in the range of 20-80.

With the activity ratio $\hat{\alpha}_k[n]$ calculated as in eq. (4), the metric scaling factor/ priority factor $\alpha_k[n]$ is assigned a value as follows (in the metric calculator and scheduler module 21a of Fig. 2):

If $\sum_{k} \hat{\alpha}_{k}[n] = 1$, (required capacity is same as available) then

$$\alpha_{k}[n] = \hat{\alpha}_{k}[n] \ \text{for all} \ k \qquad (6)$$

in which case all available capacity is allocated to the QoS-users so that the "best-effort" users (i.e. those not having any required QoS) get no capacity.

If $\sum_{k} \hat{\alpha}_{k}[n] > 1$, (required capacity is more than available) then

$$\alpha_{k}[n] = \frac{\hat{\alpha}_{k}[n]}{\sum_{k} \hat{\alpha}_{k}[n]} \ \text{for all} \ k \qquad (7)$$

so that each user suffers the same reduction of service, i.e. the service of each user is reduced by the same factor $\frac{1}{\sum_{k} \hat{\alpha}_{k}[n]}$.

If $\sum_{k} \hat{\alpha}_{k}[n] < 1$, (there is excess capacity) then

$$\alpha_{k}[n] = \hat{\alpha}_{k}[n] \ \text{for each} \ k \ \text{for which} \ \hat{\alpha}_{k}[n] > 0 \qquad (8)$$

and

$$\alpha_{k}[n] = \frac{1 - \sum_{k} \hat{\alpha}_{k}[n]}{N_{nonQoS}} \ \text{for all other} \ k, \qquad (9)$$

where $N_{nonQoS}$ is the number of users having no required QoS (i.e. best-effort users, or in other words users for which $\hat{\alpha}_{k}[n]=0$) so that all QoS users (i.e. users for which $\hat{\alpha}_{k}[n]>0$) get the same scaling factor as in the case of required capacity equal to available capacity, but the non QoS users get some capacity too, the same for each, as given by eq. (9).

Having so calculated the scaling factor $\alpha_{k}[n]$ and the conventional metric $M'_{k}[n]$, the metric $M_{k}[n] = \alpha_{k}[n] \cdot M'_{k}[n]$ can be calculated (by the metric calculator and scheduler 21a). The packet scheduler then selects the user having the largest modified metric $M_{k}[n]$ value as the next user to receive packets.

Note that in initializing for packet scheduling according to the invention, $T_{sch,k}$ is set to $r_{k}[n]$, and $T_{k}[n]$ is set to $r_{k}[n]/k$.

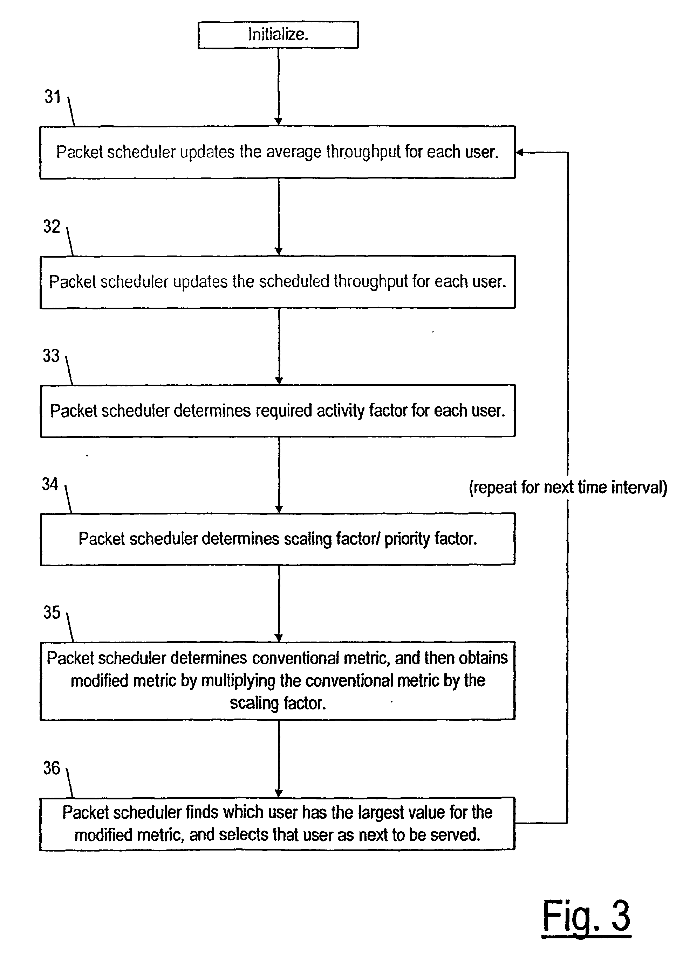

Thus, and now referring to Fig. 3, the above procedure is shown as including (after initializing) a first step 31 in which the packet scheduler/ metric calculator updates the average throughput $T_{k}[n]$ (for each user $k$). In a next step 32 the scheduled throughput $T_{sch,k}[n]$ is updated. In a next step 33 the required activity factor $\hat{\alpha}_{k}[n]$ is determined, and then in a next step 34 the scaling factor/ priority factor $\alpha_{k}[n]$ is assigned a value. Finally, in a next step 35 the modified scheduling metric $M_{k}[n]$ is determined (possible at this stage since $T_{k}[n]$ has been updated, and $r_{k}[n]$ is known), and then in a last step 36 the user having the largest value for the scheduling metric is selected as next to be served.

The functionality described above as provided by the invention could be implemented as software modules stored in a non-volatile memory of a Node-B or RNC, and executed as needed by copying all or part of the software into executable RAM (random access memory). Alternatively, the logic provided by such software can also be provided by an ASIC (application specific integrated circuit).

The invention has been described in terms of modules of an apparatus and also steps of a method. In addition, the invention encompasses a computer program product including a computer readable storage structure embodying computer program code--i.e. software or firmware--thereon for execution by a computer processor.

It is to be understood that the above-described arrangements are only illustrative of the application of the principles of the present invention. Numerous modifications and alternative arrangements may be devised by those skilled in the art without departing from the scope of the present invention, and the appended claims are intended to cover such modifications and arrangements.

**Claims**

1. A method for use by an element of a radio access network (14), comprising the step of :

   determining (33) for a given time interval a respective activity ratio for each wireless terminal (16) in communication with the radio access network (14) and having packets to be delivered to the wireless terminal by the radio access network (14) in the given time interval; and being **characterized in that** it further comprises the steps of:
   determining (35) for the given time interval a respective metric for each wireless terminal, for use in scheduling the packets for delivery to the wireless terminal (16), wherein the metric for each wireless terminal (16) is based at least in part on the activity ratio for the wireless terminal (16);

   wherein the activity ratio for each of the wireless terminals (16) having packets to be delivered during the given time interval is a ratio of a long-term throughput required for the wireless terminal (16) averaged over time intervals when the wireless terminal (16) has packets to be delivered to the wireless terminal (16), divided by a scheduled throughput for the wireless terminal (16) indicating throughput experienced by the wireless terminal (16) in the given time interval.

2. A method as in claim 1, wherein in determining a metric for each wireless terminal (16), a scaling factor is determined for the wireless terminal (16) based on the activity ratio for the wireless terminal (16), and the scaling factor is used to adjust by multiplication a metric for the wireless terminal (16) according to a scheduling algorithm not taking into account the activity ratio for the wireless terminal (16).

3. A method as in claim 2, wherein the scheduling algorithm not taking into account the activity ratio for the wireless terminal (16) uses as a metric for a wireless terminal in the given time interval a ratio of instantaneous supported rate to average delivered throughput, and calculates the average delivered throughput using a recursion relation including a user-dependent convergence-controlling parameter.

4. A method as in claim 3, wherein the scheduling algorithm not taking into account the activity ratio for the wireless terminal (16) is a proportional fair packet scheduling algorithm.

5. A computer program product comprising a computer readable storage structure embodying computer program code thereon for execution by a computer processor, wherein said computer program code comprises instructions for performing a method according to claim 1.

6. An application specific integrated circuit, comprising electronic components arranged and inter-connected as an integrated circuit and so as to perform a method according to claim 1.

7. An apparatus for use by an element of a radio access network (14), comprising:

   means (33) for determining for a given time interval a respective activity ratio for each wireless terminal (16) in communication with the radio access network (14) and having packets to be delivered to the wireless terminal (16) by the radio access network (14) in the given time interval; and **characterized in that** it further comprises:
   means (35) for determining for the given time interval a respective metric for each wireless terminal (16), for use in scheduling the packets for delivery to the wireless terminal (16), wherein the metric for each wireless terminal (16) is based at least in part on the activity ratio for the wireless terminal (16);

wherein the activity ratio for each of the wireless terminals (16) having packets to be delivered during the given time interval is a ratio of a long-term throughput required for the wireless terminal (16) averaged over time intervals when the wireless terminal (16) has packets to be delivered to the wireless terminal (16), divided by a scheduled throughput for the wireless terminal (16) indicating throughput experienced by the wireless terminal (16) in the given time interval.

8.  An apparatus as in claim 7, wherein the means (35) for determining a metric for each wireless terminal (16) is configured to determine a scaling factor for the wireless terminal (16) based on the activity ratio for the wireless terminal (16), and to use the scaling factor to adjust by multiplication a metric for the wireless terminal (16) according to a scheduling algorithm not taking into account the activity ratio for the wireless terminal (16).

9.  An apparatus as in claim 8, wherein the scheduling algorithm not taking into account the activity ratio for the wireless terminal (16) uses as a metric for a wireless terminal in the given time interval a ratio of instantaneous supported rate to average delivered throughput, and calculates the average delivered throughput using to a recursion relation including a user-dependent convergence-controlling parameter.

10. An apparatus as in claim 9, wherein the scheduling algorithm not taking into account the activity ratio for the wireless terminal (16) is a proportional fair packet scheduling algorithm.

11. An apparatus as in claim 7, wherein the apparatus is a component of a terminal (12a) used for wirelessly communicating packets to a wireless terminal.

12. A terminal of a radio access network for wirelessly communicating packets to a wireless terminal (16) of a user, comprising an apparatus as in claim 7.

13. An apparatus as in claim 7, wherein the apparatus is a component of a controller (12b) of one or more terminals for communicating packets by wireless transmission.

14. A controller of a radio access network for controlling one or more terminals used for wirelessly communicating packets to a wireless terminal of users, comprising an apparatus as in claim 7.

15. A telecommunications system, comprising a core network (11) coupled to at least one element of at least one other telecommunications system, a radio access network (14) coupled to the core network (11) and including an apparatus as in claim 7, and a plurality of wireless terminals (16) adapted for communicatively coupling to the radio access network (14).


**Patentansprüche**

1.  Verfahren zur Verwendung durch ein Element eines Funkanschlussnetzes (14) mit dem Schritt des:

    Bestimmens (33) für einen gegebenen Zeitabschnitt eines jeweiligen Aktivitätsverhältnisses für jedes in Kommunikation mit dem Funkanschlussnetz (14) befindliches drahtloses Endgerät (16) und mit dem drahtlosen Endgerät durch das Funkanschlussnetz (14) in dem gegebenen Zeitabschnitt zuzustellenden Paketen und **gekennzeichnet dadurch, dass** es weiterhin umfasst die Schritte des:
    Bestimmens (35) für den gegebenen Zeitabschnitt einer jeweiligen Metrik für jedes drahtlose Endgerät zur Verwendung bei der Zeitplanung der dem drahtlosen Endgerät (16) zuzustellenden Pakete, wobei die Metrik für jedes drahtlose Endgerät (16) mindestens teilweise auf dem Aktivitätsverhältnis für das drahtlose Endgerät (16) basiert;

    wobei das Aktivitätsverhältnis für jedes der drahtlosen Endgeräte (16) mit während des gegebenen Zeitabschnitts zuzustellenden Pakete ein Verhältnis eines für das drahtlose Endgerät (16) erforderlichen Langzeitdurchsatzes gemittelt über Zeitabschnitte ist, wenn das drahtlose Endgerät (16) dem drahtlosen Endgerät (16) zuzustellende Pakete aufweist, geteilt durch einen geplanten Durchsatz für das drahtlose Endgerät (16), der den vom drahtlosen Endgerät (16) in dem gegebenen Zeitabschnitt erfahrenen Durchsatz anzeigt.

2.  Verfahren nach Anspruch 1, wobei beim Bestimmen einer Metrik für jedes drahtlose Endgerät (16) ein Skalierfaktor für das drahtlose Endgerät (16) basierend auf dem Aktivitätsverhältnis für das drahtlose Endgerät (16) bestimmt wird und der Skalierfaktor zum Einstellen durch Multiplikation einer Metrik für das drahtlose Endgerät (16) entsprechend einem Zeitplanungsalgorithmus benutzt wird, der das Aktivitätsverhältnis für das drahtlose Endgerät (16) nicht berücksichtigt.

3. Verfahren nach Anspruch 2, wobei der das Aktivitätsverhältnis für das drahtlose Endgerät (16) nicht berücksichtigende Zeitplanungsalgorithmus als eine Metrik für ein drahtloses Endgerät in dem gegebenen Zeitabschnitt ein Verhältnis einer momentan unterstützten Rate zum Mitteln des zugestellten Durchsatzes benutzt und den durchschnittlichen zugestellten Durchsatz unter Verwendung eines Rekursionsverhältnisses einschließlich eines benutzerabhängigen konvergenzregelnden Parameters berechnet.

4. Verfahren nach Anspruch 3, wobei der das Aktivitätsverhältnis für das drahtlose Endgerät (16) nicht berücksichtigende Zeitplanungsalgorithmus ein proportionaler gerechter Paketplanungsalgorithmus ist.

5. Computerprogrammprodukt mit einer Computerprogrammcode zur Ausführung durch einen Computerprozessor darauf verwirklichenden computerlesbaren Speicherungsstruktur, wobei der Computerprogrammcode Anweisungen zur Durchführung eines Verfahrens nach Anspruch 1 umfasst.

6. Anwendungsspezifische integrierte Schaltung mit als eine integrierte Schaltung angeordneten und zusammengeschalteten elektronischen Bauteilen zur Durchführung eines Verfahrens nach Anspruch 1.

7. Vorrichtung zur Verwendung durch ein Element eines Funkanschlussnetzes (14) umfassend:

Mittel (33) zum Bestimmen für einen gegebenen Zeitabschnitt eines jeweiligen Aktivitätsverhältnisses für jedes in Kommunikation mit dem Funkanschlussnetz (14) befindliches und dem drahtlosen Endgerät (16) durch das Funkanschlussnetz (14) in dem gegebenen Zeitabschnitt zuzustellende Pakete aufweisendes drahtloses Endgerät (16) und **dadurch gekennzeichnet, dass** es weiterhin umfasst:

Mittel (35) zum Bestimmen für den gegebenen Zeitabschnitt einer jeweiligen Metrik für jedes drahtlose Endgerät (16) zur Verwendung bei der Zeitplanung der Pakete zur Zustellung zum drahtlosen Endgerät (16), wobei die Metrik für jedes drahtlose Endgerät (16) mindestens teilweise auf dem Aktivitätsverhältnis für das drahtlose Endgerät (16) basiert;

wobei das Aktivitätsverhältnis für jedes der drahtlosen Endgeräte (16) mit während des gegebenen Zeitabschnitts zuzustellenden Paketen ein Verhältnis eines für das drahtlose Endgerät (16) erforderlichen Langzeitdurchsatzes gemittelt über Zeitabschnitte ist, wenn das drahtlose Endgerät (16) dem drahtlosen Endgerät (16) zuzustellende Pakete aufweist, geteilt durch einen geplanten Durchsatz für das drahtlose Endgerät (16), der den durch das drahtlose Endgerät (16) in dem gegebenen Zeitabschnitt erfahrenen Durchsatz anzeigt.

8. Vorrichtung nach Anspruch 7, wobei das Mittel (35) zum Bestimmen einer Metrik für jedes drahtlose Endgerät (16) zum Bestimmen eines Skalierfaktors für das drahtlose Endgerät (16) basierend auf dem Aktivitätsverhältnis für das drahtlose Endgerät (16) und zum Verwenden des Skalierfaktors zum Einstellen durch Multiplikation einer Metrik für das drahtlose Endgerät (16) gemäß einem das Aktivitätsverhältnis für das drahtlose Endgerät (16) nicht berücksichtigenden Zeitplanungsalgorithmus eingerichtet ist.

9. Vorrichtung nach Anspruch 8, wobei der das Aktivitätsverhältnis für das drahtlose Endgerät (16) nicht berücksichtigende Zeitplanungsalgorithmus als eine Metrik für ein drahtloses Endgerät in dem gegebenen Zeitabschnitt ein Verhältnis einer momentan unterstützten Rate zum Mitteln des zugestellten Durchsatzes benutzt und den durchschnittlichen zugestellten Durchsatz unter Verwendung eines Rekursionsverhältnisses mit einem benutzerabhängigen Konvergenzregelungsparameter berechnet.

10. Vorrichtung nach Anspruch 9, wobei der das Aktivitätsverhältnis für das drahtlose Endgerät (16) nicht berücksichtigende Zeitplanungsalgorithmus ein proportionaler gerechter Paketzeitplanungsalgorithmus ist.

11. Vorrichtung nach Anspruch 7, wobei die Vorrichtung ein Bauteil eines zum drahtlosen Übermitteln von Paketen zu einem drahtlosen Endgerät benutzten Endgeräts (12a) ist.

12. Endgerät eines Funkanschlussnetzes zum drahtlosen Übermitteln von Paketen zu einem drahtlosen Endgerät (16) eines Benutzers, umfassend eine Vorrichtung nach Anspruch 7.

**13.** Vorrichtung nach Anspruch 7, wobei die Vorrichtung ein Bauteil einer Steuerung (12b) eines oder mehrerer Endgeräte zum Übermitteln von Paketen durch drahtlose Übertragung ist.

**14.** Steuerung eines Funkanschlussnetzes zum Steuern eines oder mehrerer zum drahtlosen Übermitteln von Paketen an ein drahtloses Endgerät von Benutzern benutzter Endgeräte, umfassend eine Vorrichtung nach Anspruch 7.

**15.** Telekommunikationssystem umfassend ein an mindestens ein Element mindestens eines weiteren Telekommunikationssystems angekoppeltes Kernnetz (11), ein an das Kernnetz (11) angekoppeltes Funkanschlussnetz (14) und mit einer Vorrichtung nach Anspruch 7 und einer Vielzahl von drahtlosen Endgeräten (16), eingerichtet zum kommunikationstechnischen Ankoppeln an das Funkanschlussnetz (14).

**Revendications**

**1.** Un procédé destiné à une utilisation par un élément d'un réseau d'accès radio (14) comprenant l'opération suivante :

la détermination (33) pour un intervalle de temps donné d'un ratio d'activité respectif pour chaque terminal sans fil (16) en communication avec le réseau d'accès radio (14) et possédant des paquets à remettre au terminal sans fil par le réseau d'accès radio (14) dans l'intervalle de temps donné, et
étant **caractérisé en ce qu'**il comprend en outre les opérations suivantes :

la détermination (35) pour l'intervalle de temps donné d'une mesure respective pour chaque terminal sans fil, pour une utilisation dans l'ordonnancement des paquets destinés à être remis au terminal sans fil (16), dans laquelle la mesure pour chaque terminal sans fil (16) est basée au moins en partie sur le ratio d'activité pour le terminal sans fil (16),
dans lequel le ratio d'activité pour chacun des terminaux sans fil (16) possédant des paquets à remettre au cours de l'intervalle de temps donné est un ratio d'un débit à long terme exigé pour le terminal sans fil (16) moyenné sur des intervalles de temps pendant lesquels le terminal sans fil (16) possède des paquets à remettre au terminal sans fil (16), divisé par un débit ordonnancé pour le terminal sans fil (16) indiquant un débit rencontré par le terminal sans fil (16) dans l'intervalle de temps donné.

**2.** Un procédé selon la revendication 1, dans lequel dans la détermination d'une mesure pour chaque terminal sans fil (16), un facteur d'échelle est déterminé pour le terminal sans fil (16) en fonction du ratio d'activité pour le terminal sans fil (16), et le facteur d'échelle est utilisé pour ajuster par multiplication une mesure pour le terminal sans fil (16) selon un algorithme d'ordonnancement ne prenant pas en compte le ratio d'activité pour le terminal sans fil (16).

**3.** Un procédé selon la revendication 2, dans lequel l'algorithme d'ordonnancement ne prenant pas en compte le ratio d'activité pour le terminal sans fil (16) utilise comme mesure pour un terminal sans fil dans l'intervalle de temps donné un ratio de débit pris en charge instantané de façon à moyenner le débit fourni et calcule le débit fourni moyen au moyen d'une relation de récursivité comprenant un paramètre de contrôle de convergence dépendant de l'utilisateur.

**4.** Un procédé selon la revendication 3, dans lequel l'algorithme d'ordonnancement ne prenant pas en compte le ratio d'activité pour le terminal sans fil (16) est un algorithme d'ordonnancement de paquets équitable proportionnel.

**5.** Un programme informatique comprenant une structure à mémoire lisible par ordinateur contenant du code de programme informatique destiné à être exécuté par un processeur informatique, dans lequel ledit code de programme informatique contient des instructions destinées à exécuter un procédé selon la revendication 1.

**6.** Un circuit intégré à application spécifique, comprenant des composants électroniques agencés et interconnectés sous la forme d'un circuit intégré et de façon à exécuter un procédé selon la revendication 1.

**7.** Un appareil destiné à une utilisation par un élément d'un réseau d'accès radio (14), comprenant :

un moyen (33) destiné à déterminer pour un intervalle de temps donné un ratio d'activité respectif pour chaque terminal sans fil (16) en communication avec le réseau d'accès radio (14) et possédant des paquets à remettre au terminal sans fil (16) par le réseau d'accès radio (14) dans l'intervalle de temps donné, et

**caractérisé en ce qu'**il comprend en outre :

un moyen (35) destiné à déterminer pour l'intervalle de temps donné une mesure respective pour chaque terminal sans fil (16) pour une utilisation dans l'ordonnancement des paquets destinés à être remis au terminal sans fil (16), dans lequel la mesure pour chaque terminal sans fil (16) est basée au moins en partie sur le ratio d'activité pour le terminal sans fil (16),

dans lequel le ratio d'activité pour chacun des terminaux sans fil (16) possédant des paquets à remettre au cours de l'intervalle de temps donné est un ratio d'un débit à long terme exigé pour le terminal sans fil (16) moyenné sur des intervalles de temps pendant lesquels le terminal sans fil (16) possède des paquets à remettre au terminal sans fil (16), divisé par un débit ordonnancé pour le terminal sans fil (16) indiquant un débit rencontré par le terminal sans fil (16) dans l'intervalle de temps donné.

8. Un appareil selon la revendication 7, dans lequel le moyen (35) destiné à déterminer une mesure pour chaque terminal sans fil (16) est configuré de façon à déterminer un facteur d'échelle pour le terminal sans fil (16) en fonction du ratio d'activité pour le terminal sans fil (16) et de façon à utiliser le facteur d'échelle pour ajuster par multiplication une mesure pour le terminal sans fil (16) selon un algorithme d'ordonnancement ne prenant pas en compte le ratio d'activité pour le terminal sans fil (16).

9. Un appareil selon la revendication 8, dans lequel l'algorithme d'ordonnancement ne prenant pas en compte le ratio d'activité pour le terminal sans fil (16) utilise comme mesure pour un terminal sans fil dans l'intervalle de temps donné un ratio de débit pris en charge instantané de façon à moyenner le débit fourni et calcule le débit fourni moyen au moyen d'une relation de récursivité comprenant un paramètre de contrôle de convergence dépendant de l'utilisateur.

10. Un appareil selon la revendication 9, dans lequel l'algorithme d'ordonnancement ne prenant pas en compte le ratio d'activité pour le terminal sans fil (16) est un algorithme d'ordonnancement de paquets équitable proportionnel.

11. Un appareil selon la revendication 7, dans lequel l'appareil est un composant d'un terminal (12a) utilisé pour communiquer de manière non filaire des paquets à terminal sans fil.

12. Un terminal d'un réseau d'accès radio destiné à communiquer de manière non filaire des paquets à un terminal sans fil (16) d'un utilisateur, comprenant un appareil selon la revendication 7.

13. Un appareil selon la revendication 7, dans lequel l'appareil est un composant d'un dispositif de commande (12b) d'un ou plusieurs terminaux pour la communication de paquets par une transmission sans fil.

14. Un dispositif de commande d'un réseau d'accès radio destiné à commander un ou plusieurs terminaux utilisés pour communiquer de manière non filaire des paquets à un terminal sans fil d'utilisateurs, comprenant un appareil selon la revendication 7.

15. Un système de télécommunications, comprenant un réseau central (11) couplé à au moins un élément d'au moins un autre système de télécommunications, un réseau d'accès radio (14) couplé au réseau central (11) et comprenant un appareil selon la revendication 7, et une pluralité de terminaux sans fil (16) adaptés de façon à être couplés en communication au réseau d'accès radio (14).

## Fig. 1

Admission control
decisions
and
load control
(resource mgmt.)
decisions

12a

*Node B*

23

**Load and Admission Control**

24

**QoS Manager**

QoS/QoE for each user
(indicating required long-term throughput)

—activity ratio for each user—

22

*Acitivity Detector*

**Scheduled Throughput Estimator** 22a

scheduled throughput for each user

**Activity Ratio Estimator** 22b

scheduling decision

—activity ratio for each user—

21

**Metric Calculator and scheduler** 21a

avg. througput and inst. rate for each user

**Avg. Throughput Estimator** 21b

—scheduling decision—

*Packet Scheduler*

inst. rate for each user

## Fig. 2

```
┌─────────────────────┐
│     Initialize.     │
└─────────────────────┘
```

31 → Packet scheduler updates the average throughput for each user.

32 → Packet scheduler updates the scheduled throughput for each user.

33 → Packet scheduler determines required activity factor for each user.

(repeat for next time interval)

34 → Packet scheduler determines scaling factor/ priority factor.

35 → Packet scheduler determines conventional metric, and then obtains modified metric by multiplying the conventional metric by the scaling factor.

36 → Packet scheduler finds which user has the largest value for the modified metric, and selects that user as next to be served.

<u>Fig. 3</u>

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005043844 A2

- US 20040095960 A